# EUROPÄISCHE PATENTSCHRIFT

(11) **EP 2 175 252 B1**
(45) Veröffentlichungstag und Bekanntmachung des Hinweises auf die Patenterteilung: **25.09.2013**
(21) Anmeldenummer: 09172404.7
(22) Anmeldetag: 07.10.2009
(51) Int. Cl.: G01L 1/22, G01L 9/04, G01L 9/00

(54) **Drucksensor mit Dehnungsmessstreifen**
Pressure sensor using strain gauges
Capteur de pression à jauges de contraintes

(30) Priorität: 11.10.2008 DE 102008051400
(43) Veröffentlichungstag der Anmeldung: 14.04.2010
(73) Patentinhaber: Metallux AG, 71404 Korb (DE)
(72) Erfinder: Kralik, Thomas, 71404, Korb (DE); Karaus, Andreas, 88138, Hergensweiler (DE)
(74) Vertreter: Bernhard, Uwe

(56) Entgegenhaltungen:
- WO-A1-94/29685
- US-A- 5 481 905

## Beschreibung

Die vorliegende Erfindung betrifft einen Drucksensor, beispielsweise zur Differenzdruckmessung, mit den Merkmalen des Oberbegriffs des Anspruchs 1.

Drucksensoren dieser Art können einen zylindrischen Körper aufweisen, der an einer axialen Stirnfläche eine aufgedruckte Dehnmessschaltung aufweist. Diese Dehnmessschaltung umfasst zweckmäßig mehrere Abgleichwiderstände, die jeweils zwei Leiterbahnen elektrisch miteinander verbinden. Mit Hilfe derartiger Abgleichwiderstände kann die mittels einer Drucktechnik hergestellte Dehnmessschaltung abgeglichen werden, um Fertigungstoleranzen auszugleichen. Beispielsweise werden die einzelnen Komponenten der Dehnmessschaltung mittels Dickschichttechnologie oder mittels Siebdruck aufgebracht. Insbesondere für elektrische Widerstände können hierbei Polymerpasten oder keramische Pasten zur Anwendung kommen.

Um beispielsweise einen analogen Abgleich durchzuführen, werden einzelne Abgleichwiderstände eingeschnitten, beispielsweise mittels eines Laserstrahls, wodurch sich ihr elektrischer Widerstandswert ändert. Hierbei besteht ein proportionaler Zusammenhang zwischen der eingebrachten Schnittlänge und der Widerstandszunahme. Bei vergleichsweise kurzen Schnitten ist der Zusammenhang linear, während bei größeren Schnittlängen der Widerstand exponentiell, also überproportional zunimmt. Um den Abgleich möglichst genau durchzuführen, muss die Schnittlänge daher im linearen Bereich des zuvor genannten Zusammenhangs bleiben. Am Ende des jeweiligen Einschnitts kann es aufgrund einer thermischen Wechselbelastung zur Entstehung und Ausbreitung von Mikrorissen kommen, die bei einem geringen Abstand zum exponentiellen Bereich rasch den linearen Bereich verlassen und den Widerstandswert signifikant verändern können. Des Weiteren ist es grundsätzlich möglich, Abgleichwiderstände parallel zu schalten, um einen digitalen Abgleich durchzuführen. Beim Digitalabgleich können einzelne Abgleichwiderstände durch entsprechende Schnitte vollständig durchtrennt werden, wodurch sich eine Widerstandsänderung in vorbestimmten Schritten einstellt.

Aus der WO 94/29685 A1 ist ein gattungsgemäßer Drucksensor bekannt, der einen zylindrischen Körper aufweist, auf den eine Dehnmessschaltung aufgedruckt ist, die mehrere Abgleichwiderstände umfasst, die jeweils zwei Leiterbahnen elektrisch miteinander verbinden, wobei sich zumindest zwei solche Leiterbahnen in der Umfangsrichtung gekrümmt erstrecken, in Radialrichtung voneinander beabstandet sind und durch zumindest einen Abgleichwiderstand in Radialrichtung miteinander elektrisch verbunden sind.

Die vorliegende Erfindung beschäftigt sich mit dem Problem, für einen Drucksensor der eingangs genannten Art eine verbesserte Ausführungsform anzugeben, die sich insbesondere dadurch auszeichnet, dass der Abgleich der Dehnmessschaltung genauer durchführbar ist und/oder dass die Dehnmessschaltung in einem vorbestimmten Temperaturbereich eine erhöhte Genauigkeit besitzt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die gekrümmte Form des Körpers des Drucksensors dazu auszunutzen, auch die Abgleichwiderstände gekrümmt anzuordnen bzw. auszugestalten. Durch die in der Umfangsrichtung des zylindrischen Körpers gekrümmte Form für die Leiterbahnen bzw. für die Abgleichwiderstände kann eine sehr viel größere Fläche an der bedruckten Axialseite des Körpers zur Realisierung der Abgleichwiderstände ausgenutzt werden.

Zum einen lässt sich dadurch eine größere Anzahl an Abgleichwiderständen aufdrucken. Zum anderen können einzelne Abgleichwiderstände dadurch auch erheblich größer, insbesondere länger gestaltet werden. Darüber hinaus bietet die verbesserte Ausnutzung der zur Verfügung stehenden Fläche auch die Möglichkeit, die Abgleichwiderstände so zu konfigurieren, dass sowohl ein digitaler Abgleich als auch ein analoger Abgleich durchführbar ist, wodurch die Genauigkeit des einstellbaren Abgleichs erhöht ist. Die Anordnung der Abgleichwiderstände in Umfangsrichtung des Körpers, führt außerdem dazu, dass thermisch bedingte Dehnungen des Körpers einen vergleichsweise geringen Einfluss auf den Widerstandswert der Abgleichwiderstände haben. Mit anderen Worten, aufgrund der in Umfangsrichtung gekrümmt ausgestalteten Abgleichwiderstände kann die thermische Stabilität der Dehnmessschaltung innerhalb eines vorbestimmten Temperaturbereichs verbessert werden. Wie vorstehend bereits erläutert, können die in Umfangsrichtung gekrümmten Abgleichwiderstände in der Umfangsrichtung mit einer relativ großen Länge realisiert werden. Hierdurch ist es insbesondere möglich, zum analogen Abgleichen relativ lange Schnitte anzubringen, nämlich insbesondere in der Umfangsrichtung, ohne den linearen Zusammenhang zwischen Schnittlänge und Widerstandswert zu verlassen. Somit führt die gekrümmte Formgebung der Abgleichwiderstände zu einer erheblichen Verbesserung der Genauigkeit des Abstimmvorgangs.

Erfindungsgemäß erstrecken sich zumindest zwei solche Leiterbahnen in der Umfangsrichtung gekrümmt, die in Radialrichtung voneinander beabstandet sind und durch zumindest einen Abgleichwiderstand in Radialrichtung miteinander elektrisch verbunden sind. Mit anderen Worten, bei der Erfindung erstrecken sich die Leiterbahnen in Radialrichtung voneinander beabstandet und sind in der Radialrichtung durch den jeweiligen Abgleichwiderstand miteinander verbunden. Hierdurch ist es insbesondere möglich, in der Umfangsrichtung einen besonders langen Abgleichwiderstand vorzusehen oder eine relativ große Anzahl einzelner Abgleichwiderstände hintereinander anzuordnen, die dann parallel geschaltet sind.

Erfindungsgemäß weist zumindest einer der Abgleichwiderstände eine Abgleichtrennung aufdie sich zwischen den Leiterbahnen in der Umfangsrichtung erstreckt und entlang ihrer Erstreckung die elektrische Verbindung der Leiterbahnen unterbricht, mit anderen Worten, die Abgleichtrennung erstreckt sich parallel zu den Leiterbahnen und parallel zum jeweiligen Abgleichwiderstand. Da zumindest für einen Analogabgleich der jeweilige Abgleichwiderstand in der Umfangsrichtung eine relativ große Länge aufweisen kann, bleibt die daran vorgesehene Abgleichtrennung auch bei einer vergleichsweise großen Länge in Umfangsrichtung noch innerhalb des linearen Bereichs des jeweiligen Abgleichwiderstands. Hierdurch kann der Abgleich mit hoher Genauigkeit und mit einer hohen Stabilität über die Lebensdauer des jeweiligen Sensors durchgeführt werden. Insbesondere hat beispielsweise auch eine Entstehung und Ausbreitung von Mikrorissen am jeweiligen Ende der Abgleichtrennung nur einen minimalen Einfluss auf den eingestellten Abgleich.

Eine besonders kompakte Anordnung und somit eine besonders effektive Ausnutzung der bedruckbaren Fläche ergibt sich, wenn mehrere Abgleichwiderstände und/oder Leiterbahnen innerhalb wenigstens eines Umfangssegments in konzentrischen Bögen angeordnet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine teilweise geschnittene Seitenansicht eines Drucksensors,
- Fig. 2: eine Craufsicht auf eine mit einer Dehnmessschaltung versehene Stirnfläche des Drucksensors.

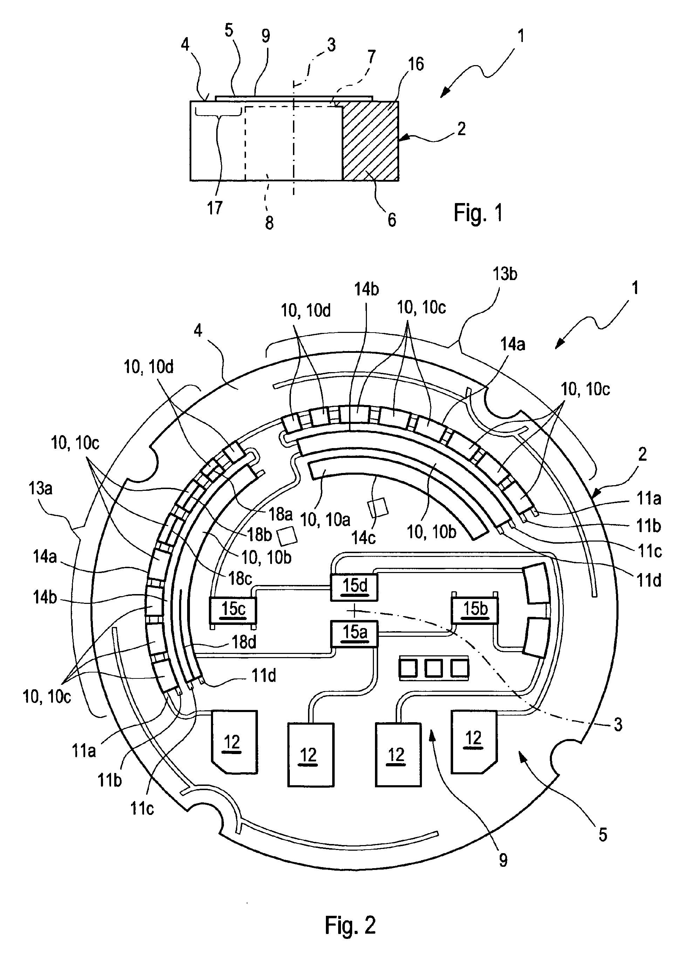

Entsprechend Fig. 1 besitzt ein Drucksensor 1, der bevorzugt zur Differenzdruckmessung zum Einsatz kommt, einen zylindrischen Körper 2, dessen Längsmittelachse durch eine unterbrochene Linie angedeutet und mit 3 bezeichnet ist. Der Körper 2 besitzt eine axiale Stirnfläche 4. Auf den Körper 2 ist axial innen oder außen eine Dehnmessschaltung 5 aufgedruckt. Im gezeigten Beispiel der Fig. 1 umfasst der Körper 2 einen Grundkörper 6 sowie eine Membran 7, die eine zentrale Öffnung 8 der Grundkörpers 6 an einem axialen Ende verschließt. Die Dehnmessschaltung 5 ist zumindest mit einem Messbereich 9 auf diese Membran 7 aufgedruckt. Bevorzugt besteht der Körper 2 aus einem keramischen Werkstoff. Auch die Membran 7 kann aus einem Keramikwerkstoff hergestellt sein. Besonders vorteilhaft ist eine Ausführungsform, bei welcher der Grundkörper 6 und dieMembran 7 integral aus einem Stück hergestellt sind und dadurch einen Monolithkörper bilden. Im gezeigten Beispeil ist die Dehnmessschaltung 5 auf die axiale äußerer Stirnfläche 4 der Körpers 2 aufgedruckt. Grundsätzlich ist es ebenso möglich, die Dehnmesschaltung 5 an einer beliebigen anderen Stelle des Körpers 2 aufzudrucken. Beispielsweise kann die Dehnmessschaltung 5 an einer Zentralöffnung 8 zugewandten Innenseite auf die Membra, 7 aufgedruckt sein, insbesondere dann, wenn die Membran 7 separat vom Grundkörper 6 hergestellt wird.

Im Beispiel der Fig. 1 besitzt der Körper 2 in einem Längsschnitt parallel zur Längsmittelachse 3 im Bereich seines Grundkörpers 6 ein Profil 16, das im Beispiel der Fig. 1 eine rechteckige Form besitzt. Mittig zu diesem Profil 16 besitzt der Körper 2 einen in Fig. 1 durch eine geschweifte Klammer angedeuteten Bereich 17. Es hat sich gezeigt, dass der ringförmige Grundkörper 6 in diesem Bereich 17 die geringsten thermischen Dehnungseffekte zeigt. Dies gilt insbesondere auch dann, wenn der Grundkörper 6 zusammen mit der Membran 7 als Monolit ausgestaltet ist.

Entsprechend Fig. 2 umfasst die Dehnmessschaltung 5 den Messbereich 9, der exemplarisch als Wheatstone-Brücke ausgestaltet ist. Ferner umfasst die Dehnmessschaltung 5 mehrere Abgleichwiderstände 10, die beispielsweise mit unterschiedlichen Größen a bis d realisiert sind. Beispielsweise sind größere Abgleichwiderstände 10a und 10b vorgesehen sowie kleinere Abgleichwiderstände 10c und 10d. Die Begriffe "groß" und "klein" beziehen sich auf die zweidimensionale Erstreckung bzw. Fläche der Widerstände 10 in der Ebene der Schaltung 5, die jedoch mit dem Ohmschen Wert der Widerstände 10 korreliert. Des Weiteren sind mehrere Leiterbahnen 11a bis 11d vorgesehen, wobei die aktiven Abgleichwiderstände 10 je zwei der Leiterbahnen 11 elektrisch miteinander verbinden. Ferner weist die Dehnmessschaltung 5 elektrische Anschlüsse 12 auf, über die eine Auswerteelektronik oder dergleichen an den Drucksensor 1 anschließbar ist.

Zumindest einige der Abgleichwiderstände 10 besitzen eine in der Umfangsrichtung des zylindrischen Körpers 2 gekrümmte Form. Im Beispiel sind alle Abgleichwiderstände 10 in der Umfangsrichtung gekrümmt. Zusätzlich oder alternativ sind zumindest zwei der Leiterbahnen 11 in der Umfangsrichtung gekrümmt und in radialer Richtung bezogen auf die Längsmittelachse 3 voneinander beabstandet sowie in der Radialrichtung durch zumindest einen Abgleichwiderstand 10 elektrisch miteinander verbunden. Im Beispiel sind alle mit den Abgleichwiderständen 10 untereinander kontaktieren Leiterbahnen 11 so gekrümmt, dass sie sich in der Umfangsrichtung erstrecken. Des Weiteren ist bei der in Fig. 2 gezeigten Ausführungsform vorgesehen, sowohl die Leiterbahnen 11 als auch die zugehörigen Abgleichwiderstände 10 so zu formen, dass sie sich in der Umfangsrichtung gekrümmt erstrecken.

Bei der in Fig. 2 gezeigten Ausführungsform sind zwei Umfangssegmente 13a und 13b ausgebildet, in denen jeweils mehrere Abgleichwiderstände 10 sowie mehrere Leiterbahnen 11 in konzentrischen Bögen 14a bis 14c angeordnet sind. Dabei bildet jeweils ein Paar der Leiterbahnen 11 zusammen mit den die Leiterbahnen 11 des Paars miteinander verbindenden Abgleichwiderstände 10 einen solchen Bogen 14. Dies gilt zumindest für die Bögen 14a und 14b. Der Bogen 14c besteht ausschließlich aus dem Abgleichwiderstand 10a, der im Beispiel an keine Leiterbahn 11 angeschlossen ist und dementsprechend inaktiv ist. Im gezeigten Beispiel erstrecken sich die Bögen 14 ebenso wie die zugehörigen Leiterbahnen 11 sowie die hintereinander angeordneten kurzen Abgleichwiderstände 10c und 10d sowie die langen Abgleichwiderstände 10b in einem Winkel von etwa 90°. Dementsprechend erstrecken sich auch die zugehörigen Umfangssegmente 13a und 13b im Beispiel jeweils in einem Winkel von etwa 90°. Grundsätzlich ist auch ein einzelnes Umfangssegment 13 denkbar, dass sich z.B. in einem Winkel bis etwa 180° erstrecken kann. Dementsprechend können dann auch die zugehörigen Bögen 14 und/oder Abgleichwiderstände 10 und/oder Leiterbahnen 11 über einen entsprechend großen Winkelbereich erstrecken.

Im gezeigten Beispiel ist der Körper 2 kreiszylindrisch geformt. Dementsprechend sind auch die gekrümmten Abgleichwiderstände 10 bzw. die gekrümmten Leiterbahnen 11 kreisbogenförmig gekrümmt. Insbesondere besitzen die konzentrischen Bögen 14 den gleichen Mittelpunkt, nämlich auf der Längsmittelachse 3.

Im Beispiel der Fig. 2 erstreckt sich die radial außenliegende Leiterbahn 11a über beide Umfangssegmente 13, also im Wesentlichen über einen Winkel von etwa 180°. In jedem Umfangssegment 13a, 13b bildet diese außenliegende Leiterbahn 11a mit der radial nach innen dazu benachbarten Leiterbahn 11b ein Leiterbahnenpaar, das im Folgenden als außenliegendes Leiterbahnenpaar 11ab bezeichnet wird, um es von einem innenliegenden Leiterbahnenpaar 11cd zu unterscheiden, das durch die radial weiter innen in radialer Richtung zueinander benachbarten Leiterbahnen 11c und 11d gebildet ist. Beim außenliegenden Leiterbahnenpaar 11ab sind über die sich in der Umfangsrichtung erstreckende Länge der Leiterbahnen 11a und 11b mehrere, relativ kleine bzw. relativ kurze Abgleichwiderstände 10c und 10d hintereinander angeordnet, die jeweils die beiden Leiterbahnen 11a und 11b des jeweiligen außenliegenden Leiterbahnenpaars 11ab miteinander elektrisch verbinden. Die Abgleichwiderstände 10c, 10d sind hierbei parallel geschaltet. Sie können für einen effizienten Digitalabgleich verwendet werden. Nicht benötigte Abgleichwiderstände 10c, 10d werden einfach zwischen den Leiterbahnen 11a, 11b mittels eines geeigneten Schnitts durchtrennt und dadurch deaktiviert. Die Gruppe der hintereinander angeordneten kurzen Abgleichwiderstände 10c, 10d erstreckt sich dabei über die gesamte Länge bzw. über einen wesentlichen Anteil der Länge der Leiterbahnen 11a, 11b dieses äußeren Leiterbahnenpaars 11ab. Von den kurzen Abgleichwiderständen 10c, 10d sind im Beispiel zwei verschiedene Größen vorhanden, was einen präziseren Digitalabgleich ermöglicht.

Im Unterschied dazu ist beim jeweiligen inneren Leiterbahnenpaar 11cd jeweils nur ein einziger Abgleichwiderstand 10b vorgesehen, um die beiden innenliegenden Leiterbahnen 11c, 11d miteinander elektrisch zu verbinden. Dabei erstreckt sich dieser lange Abgleichwiderstand 10b im Wesentlichen über die gesamte Länge der sich in Umfangsrichtung erstreckenden Leiterbahnen 11c, 11d oder zumindest über einen wesentlichen Anteil dieser Länge. Dieser lange Abgleichwiderstand 10b eignet sich in besonderer Weise zur Realisierung eines Analogabgleichs. Durch seine große Länge erlaubt er vergleichsweise lange Einschnitte, ohne dass dabei der lineare Zusammenhang zwischen Schnittlänge und Widerstandsänderung verlassen wird.

Im Beispiel der Fig. 2 ist der Abgleich der Dehnmessschaltung 5 rein exemplarisch nur für das eine, hier links dargestellte Umfangssegment 13a durchgeführt worden, während das andere, hier rechts wiedergegebene Umfangssegment 13b noch nicht abgeglichen worden ist. Der Abgleich der Abgleichwiderstände 10 erfolgt mittels wenigstens einer Abgleichtrennung 18. Im Beispiel der Fig. 2 sind vier derartige Abgleichtrennungen 18 wiedergegeben. Erkennbar ist eine Abgleichtrennung 18a in einem der kleineren kurzen Abgleichwiderstände 10d sowie zwei Abgleichtrennungen 18b und 18c in zwei längeren kurzen Abgleichwiderständen 10c. Außerdem ist eine Abgleichtrennung 18d im langen Abgleichwiderstand 10b vorgesehen. Die jeweilige Abgleichtrennung 18 erstreckt sich dabei zwischen den jeweiligen zwei Leiterbahnen 11a und 11b bzw. 11c und 11d. Ferner erstreckt sich die jeweilige Abgleichtrennung 18 in der Umfangsrichtung, also parallel zu den Abgleichwiderständen 10 sowie parallel zu den Leiterbahnen 11. Die jeweilige Abgleichtrennung 18 ist so ausgeführt, dass sie entlang ihrer Erstreckung, also entlang ihrer Erstreckung in Umfangsrichtung, die elektrische Verbindung zwischen den zugehörigen Leiterbahnen 11 in Radialrichtung unterbricht. Diese Abgleichtrennung 18 kann beispielsweise in Form eines Schnitts realisiert werden, der bevorzugt mit Hilfe eines Lasers erzeugt wird. Grundsätzlich sind jedoch auch andere Trennverfahren denkbar, wie z. B. ein Trennfräsen oder sonstiges Abtragen des Widerstandsmaterials des jeweiligen Abgleichwiderstandes 10.

Im gezeigten Beispiel sind für den Digitalabgleich drei der insgesamt acht kurzen Abgleichwiderstände 10c und 10d deaktiviert worden. Hierzu ist die jeweilige Abgleichtrennung 18a, 18b und 18c so ausgeführt, dass sie den gesamten Abgleichwiderstand 10c und 10d entlang seiner gesamten Erstreckung in Umfangsrichtung unterbricht. Im Unterschied dazu ist am langen Abgleichwiderstand 10b ein Analogabgleich durchgeführt worden, indem der lange Abgleichwiderstand 10b mit der Abgleichtrennung 18d in Form eines Einschnitts in Umfangsrichtung versehen worden ist. Erkennbar kann die Abgleichtrennung 18d in Umfangsrichtung vergleichsweise lang ausgeführt werden, ohne dass dabei der lineare Bereich des langen Abgleichwiderstands 10b verlassen wird. Darüber hinaus ist die Gefahr einer Widerstandsänderung des langen Abgleichwiderstands 10b aufgrund von Mikrorissen und dergleichen, die aufgrund einer thermischen Wechselbelastung am Schnittende auftreten können, erheblich reduziert. Zum einen befindet sich auch das Ende des Einschnitts im linearen Bereich des Abgleichwiderstands 10b. Zum anderen befindet sich der gesamte Abgleichwiderstand 10b in einem Bereich des Drucksensors 1, der sich bei thermischer Belastung nur sehr gering deformiert.

Vorzugsweise sind die Abgleichwiderstände 10 außerhalb der Membran 7 angeordnet. Insbesondere befinden sie sich im Bereich 17, also insbesondere mittig zum Profil 16. Der Bereich 17 des Körpers 2 bzw. des Grundkörpers 6 zeichnet sich durch minimale geometrische Formänderungen bei thermischer Belastung des Drucksensors 1 aus. Dementsprechend fallen auch die Auswirkungen auf die Abgleichwiderstände 10 gering aus.

Bei der hier vorgestellten Dehnmessschaltung 5 sind somit zwei Gruppen von Abgleichwiderständen 10b bis 10d vorgesehen, die jeweils in einem der Umfangssegmente 13a, 13b angeordnet sind. Dabei umfasst jede Abgleichwiderstandsgruppe mehrere parallel geschaltete, vergleichsweise kurze Abgleichwiderstände 10c, 10d zur Realisierung eines Digitalabgleichs sowie einen relativ langen Abgleichwiderstand 10b zum Realisieren eines Analogabgleichs. Die Abgleichwiderstände 10c, 10d für den Digitalabgleich und der Abgleichwiderstand 10b für den Analogabgleich sind dabei hintereinander angeordnet und dienen jeweils zum Abgleich von zwei Messwiderständen 15 der insgesamt vier Messwiderstände des Messbereichs 9. Innerhalb des jeweiligen Umfangssegments 13 sind die Digital-Abgleichwiderstände 10c, 10d und die Analog-Abgleichwiderstände 10b in Reihe geschaltet. Hierzu sind die radial mittleren Leiterbahnen 11b und 11c miteinander verbunden. Die eine Gruppe 13a von Abgleichwiderständen 10 dient zum Abgleich der beiden Messwiderstände 15a und 15b. Die anderen zwei Messwiderstände 15c und 15d werden mit Hilfe der anderen Gruppe 13b von Abgleichwiderständen 10 abgeglichen.

## Patentansprüche

1. Drucksensor mit einem zylindrischen Körper (2), auf den eine Dehnmessschaltung (5) aufgedruckt ist, die mehrere Abgleichwiderstände (10) umfasst, die jeweils zwei Leiterbahnen (11) elektrisch miteinander verbinden, wobei sich zumindest zwei solche Leiterbahnen (11) in der Umfangsrichtung gekrümmt erstrecken, in Radialrichtung voneinander beabstandet sind und durch zumindest einen Abgleichwiderstand (10) in Radialrichtung miteinander elektrisch verbunden sind,
**dadurch gekennzeichnet,**
**dass** zumindest einer der Abgleichwiderstände (10) eine Abgleichtrennung (18) aufweist, die sich zwischen den Leiterbahnen (11) in der Umfangsrichtung erstreckt und entlang ihrer Erstreckung die elektrische Verbindung der Leiterbahnen (11) unterbricht.

2. Drucksensor nach dem Oberbegriff des Anspruchs 1, insbesondere nach Anspruch 1,
**dadurch gekennzeichnet,**
**dass** zumindest einige dieser Abgleichwiderstände (10) eine in der Umfangsrichtung gekrümmte Form aufweisen.

3. Drucksensor nach Anspruch 1 oder 2,
**dadurch gekennzeichnet,**
**dass** sich mehrere Abgleichwiderstände (10) und/oder Leiterbahnen (11) inner-halb wenigstens eines Umfangssegments (13) in konzentrischen Bögen (14) erstrecken.

4. Drucksensor nach einem der Ansprüche 1 bis 3,
**dadurch gekennzeichnet,**
**dass** sich zumindest ein solcher Bogen (14) und/oder ein Abgleichwiderstand (10) und/oder ein Leiterbahnpaar (11) in einem Winkel erstreckt, der in einem Bereich von etwa einschließlich 90° bis etwa einschließlich 180° liegt.

5. Drucksensor nach einem der Ansprüche 1 bis 4,
**dadurch gekennzeichnet,**
**dass** der Körper (2) kreisförmig ausgestaltet ist und die jeweiligen gekrümmten Abgleichwiderstände (10) und/oder gekrümmten Leiterbahnen (11) kreisbogenförmig gekrümmt sind.

6. Drucksensor nach einem der Ansprüche 1 bis 5,
**dadurch gekennzeichnet,**
**dass** zwei Leiterbahnen (11), die sich in Umfangsrichtung gekrümmt erstrecken und die in Radialrichtung voneinander beabstandet sind, durch einen einzigen, sich über die gesamte Länge oder einen wesentlichen Anteil der Länge der Leiterbahnen (11) in Umfangsrichtung erstreckenden Abgleichwiderstand (10) in radialer Richtung miteinander elektrisch verbunden sind.

7. Drucksensor nach einem der Ansprüche 1 bis 6,
**dadurch gekennzeichnet,**
**dass** zwei Leiterbahnen (11), die sich in Umfangsrichtung gekrümmt erstrecken und die in radialer Richtung voneinander beabstandet sind, durch mehrere, über die gesamte Länge oder über einen wesentlichen Anteil der Länge der Leiterbahnen (11) in Umfangsrichtung hintereinander angeordnete und in Umfangsrichtung voneinander beabstandete Abgleichwiderstände (10) miteinander elektrisch verbunden sind.

8. Drucksensor nach einem der Ansprüche 1 bis 7,
**dadurch gekennzeichnet,**
**dass** der Körper (2) ringförmig ausgestaltet ist und eine Membran (7) aufweist, auf die zumindest ein Messbereich (9) der Dehnmessschaltung (5) aufgedruckt ist.

9. Drucksensor nach Anspruch 8,
**dadurch gekennzeichnet,**
**dass** Körper (2) und Membran (7) einen integralen Monolithkörper bilden.

10. Drucksensor nach einem der Ansprüche 1 bis 9,
**dadurch gekennzeichnet,**
**dass** der Körper (2) aus Keramik besteht.

11. Drucksensor nach einem der Ansprüche 1 bis 10,
**dadurch gekennzeichnet,**
**dass** die Abgleichwiderstände (10) in einem Bereich (17) angeordnet sind, der im Betrieb des Drucksensors (1) den geringsten thermisch bedingten Dehnungen ausgesetzt ist.

12. Drucksensor nach einem der Ansprüche 1 bis 11,
**dadurch gekennzeichnet,**
**dass** die Abgleichwiderstände (10) im Profil (16) eines ringförmigen Bereichs (6) des Körpers (2) mittig angeordnet sind.

## Claims

1. A pressure sensor having a cylindrical body (2) on which a strain gauge circuit (5) is imprinted that comprises a plurality of balancing resistors (10) each of which electrically connects two conductor path (11) to each other, wherein at least two such conductor paths (11) extend curved in the circumferential direction, are spaced apart from each other in the radial direction and are connected to each other in the radial direction by at least one balancing resistor (10),
**characterized in**
**that** at least one of the balancing resistors (10) has a balancing separator (18) which extends between the conductor paths (11) in the circumferential direction and interrupts along its extent the electrical connection of the conductor paths (11).

2. The pressure sensor according to the preamble of the claim 1, in particular according to claim 1, **characterized in that** at least some of these balancing resistors (10) have a shape that is curved in the circumferential direction.

3. The pressure sensor according to claim 1 or claim 2, **characterized in that** a plurality of balancing resistors (10) and/or conductor paths (11) extend in concentric arcs (14) within at least one circumferential segment (13).

4. The pressure sensor according to any one of the claims 1 to 3, **characterized in that** at least one such arc (14) and/or one balancing resistor (10) and/or one pair of conductor paths (11) extend at an angle that
lies in a range of from approximately and including 90° to approximately and including 180°.

5. The pressure sensor according to any one of the claims 1 to 4, **characterized in that** the body (2) is configured circularly and the respective curved balancing resistors (10) and/or the curved conductor paths (11) are curved in an arc-shaped manner.

6. The pressure sensor according to any one of the claims 1 to 5, **characterized in that** two conductor paths (11) that extend in the circumferential direction and are spaced apart from each other in the radial direction are electrically connected to each other in the radial direction through a single adjustable resistor (10) that extends over the entire length or a substantial portion of the length of the conductor paths (11).

7. The pressure sensor according to any one of the claims 1 to 6, **characterized in that** two conductor paths (11) that extend in the circumferential direction and are spaced apart from each other in the radial direction are electrically connected to each other in the radial direction through a plurality of balancing resistors (10) that are arranged one behind the other in the circumferential direction over the entire length or a substantial portion of the length of the conductor paths (11) and are spaced apart from each other in the circumferential direction.

8. The pressure sensor according to any one of the claims 1 to 7, **characterized in that** the body (2) is configured in a ring-shaped manner and has a membrane (7) on which at least one measuring range (9) of the strain gauge circuit (5) is imprinted.

9. The pressure sensor according to claim 8, **characterized in that** the body (2) and the membrane (7) form an integral monolithic body.

10. The pressure sensor according to any one of the claims 1 to 9, **characterized in that** the body (2) consists of ceramics.

11. The pressure sensor according to any one of the claims 1 to 10, **characterized in that** the balancing resistors (10) are arranged in a region (17) which, during the operation of the pressure sensor (1), is subjected to the lowest thermally induced strains.

12. The pressure sensor according to any one of the claims 1 to 11, **characterized in that** the balancing resistors (10) are arranged centrally in the profile (16) of a ring-shaped region (6) of the body (2).

## Revendications

1. Capteur de pression comportant un corps cylindrique (2), sur lequel un circuit de jauge de contrainte (5) est apposé, qui comprend plusieurs résistances d'équilibrage (10), qui relient électriquement respectivement deux pistes conductrices (11) l'une à l'autre, dans lequel au moins deux telles pistes conductrices (11) s'étendent en incurvation dans la direction circonférentielle, sont espacées l'une de l'autre dans la direction radiale et sont reliées électriquement l'une à l'autre par au moins une résistance d'équilibrage (10) dans la direction radiale, **caractérisé en ce que** au moins une des résistances d'équilibrage (10) présente une séparation d'équilibrage (18), qui s'étend entre les pistes conductrices (11) dans la direction circonférentielle et interrompt le long de leur extension la liaison électrique des pistes conductrices (11).

2. Capteur de pression selon le préambule de la revendication 1, notamment selon la revendication 1, **caractérisé en ce que** au moins quelques-unes de ces résistances d'équilibrage (10) présentent une forme incurvée dans la direction circonférentielle.

3. Capteur de pression selon les revendications 1 ou 2, **caractérisé en ce que** plusieurs résistances d'équilibrage (10) et/ou pistes conductrices (11) s'étendent à l'intérieur d'au moins un segment circonférentiel (13) en arcs concentriques (14).

4. Capteur de pression selon une des revendications 1 à 3, **caractérisé en ce que** au moins un tel arc (14) et/ou une résistance d'équilibrage (10) et/ou une paire de pistes conductrices (11) s'étend en un angle, qui est compris dans plage d'environ 90° à environ 180° inclus.

5. Capteur de pression selon une des revendications 1 à 4, **caractérisé en ce que** le corps (2) est configuré en forme de croix et les résistances d'équilibrage (10) incurvées respectives et/ou pistes conductrices incurvées (11) sont incurvées en forme d'arc de cercle.

6. Capteur de pression selon une des revendications 1 à 5, **caractérisé en ce que** deux pistes conductrices (11), qui s'étendent en incurvation dans la direction circonférentielle et qui sont espacés l'une de l'autre dans la direction radiale, sont reliées électriquement l'une à l'autre dans la direction radiale par une résistance d'équilibrage (10) unique, s'étendant essentiellement sur la longueur totale ou une fraction essentielle de la longueur des pistes conductrices (11) dans la direction circonférentielle.

7. Capteur de pression selon une des revendications 1 à 6, **caractérisé en ce que** deux pistes conductrices (11), qui s'étendent en incurvation dans la direction circonférentielle et sont espacées l'une de l'autre dans la direction radiale, sont reliées électriquement l'une à l'autre par plusieurs résistances d'équilibrage (10) disposées l'une derrière l'autre sur la longueur totale ou sur une fraction essentielle de la longueur des pistes conductrices (11) et espacées l'une de l'autre dans la direction circonférentielle.

8. Capteur de pression selon une des revendications 1 à 7, **caractérisé en ce que** le corps (2) a une configuration annulaire et présente une membrane (7), sur laquelle au moins une plage de mesure (9) du circuit de jauge de contrainte (5) est apposée.

9. Capteur de pression selon la revendication 8, **caractérisé en ce que** le corps (2) et la membrane (7) forment un corps monolithique intégral.

10. Capteur de pression selon une des revendications 1 à 9, **caractérisé en ce que** le corps (2) est constitué de céramique.

11. Capteur de pression selon une des revendications 1 à 10, **caractérisé en ce que** les résistances d'équilibrage (10) sont disposées dans une zone (17), qui est exposée lors du fonctionnement du capteur de pression (1) aux dilatations thermiques les plus minimes.

12. Capteur de pression selon une des revendications 1 à 11, **caractérisé en ce que** les résistances d'équilibrage (10) sont disposées au centre dans le profilé (16) d'une zone annulaire (6) du corps (2).
